# EUROPEAN PATENT SPECIFICATION

(11) **EP 4 528 913 B1**
(45) Date of publication and mention of the grant of the patent: **11.11.2026**
(21) Application number: 23835805.5
(22) Date of filing: 04.07.2023
(51) Int. Cl.: H01M 50/105, H01M 10/48, H01M 10/647, H01M 10/613, H01M 10/6556, H01M 50/548, H01M 50/54

(54) **SECONDARY BATTERY**
SEKUNDÄRBATTERIE
BATTERIE SECONDAIRE

(30) Priority: 04.07.2022 KR 20220082077
(43) Date of publication of application: 26.03.2025
(73) Proprietor: LG Energy Solution, Ltd., Seoul 07335 (KR)
(72) Inventor: LEE, Bum Hee, Daejeon 34122 (KR)
(74) Representative: Plasseraud IP
(86) International application number: PCT/KR2023/009424
(87) International publication number: WO 2024/010339

(56) References cited:
- JP-B2- 4 751 500
- JP-B2- 5 380 798
- KR-A- 20120 134 470
- KR-A- 20190 005 296
- KR-A- 20190 142 973
- KR-B1- 101 073 010
- KR-B1- 102 083 656
- US-A1- 2013 224 562
- US-A1- 2021 184 292

## Description

### TECHNICAL FIELD

The present invention relate to a secondary battery.

### BACKGROUND ART

Secondary batteries are rechargeable unlike primarily batteries, and also, the possibility of compact size and high capacity is high. Thus, recently, many studies on secondary batteries are being carried out. As technology development and demands for mobile devices increase, the demands for secondary batteries as energy sources are rapidly increasing.

Rechargeable batteries are classified into coin type batteries, cylindrical type batteries, prismatic type batteries, and pouch type batteries according to a shape of a battery case. The secondary battery accommodates an electrode assembly and an electrolyte. In such a secondary battery, an electrode assembly mounted in a battery case is a chargeable and dischargeable power generating device having a structure in which an electrode and a separator are stacked.

The electrode assembly may be approximately classified into a jelly-roll type electrode assembly in which a separator is interposed between a positive electrode and a negative electrode, each of which is provided as the form of a sheet coated with an active material, and then, the positive electrode, the separator, and the negative electrode are wound, a stacked type electrode assembly in which a plurality of positive and negative electrodes with a separator therebetween are sequentially stacked, and a stack/folding type electrode assembly in which stacked type unit cells are wound together with a separation film having a long length.

Recently, the pouch-type battery in which a stack/folding type electrode assembly is built in a pouch-type battery case provided as an aluminum lamination sheet is attracting much attention due to its low manufacturing cost, small weight, easy shape deformation, and the like, and thus, its usage is gradually increasing.

Referring to the structure of the pouch cell, an outer appearance of the pouch and a lead may be relatively firmly coupled to each other in a sealed shape. On the other hand, the internal electrode and the lead are coupled to each other by welding between each tab attached to the electrode and the lead. However, the connected portion between the tab and lead, which supports a body of the electrode, may gradually weaken in durability due to use environments such as vibration and impacts by the advancement of technology, in which the tab becoming thinner and the number of mono-cell stacks, which increases due to high capacity.

That is, the body is supported only by the tab welding between the electrode and the lead without a separate support structure, and thus there is a limitation in durability, resulting from use environments such as the vibration and impacts.
Document US 2021/184292 A1 discloses a secondary battery comprising a central cooling plate comprising insertion holes for the electrode leads.
Document US 2013/224562 A1 discloses a secondary battery comprising a flexible electrode assembly and a rigid support board connecting the electrode leads.
Document JP 4 751500 B2 discloses a secondary battery comprising a roll-type electrode assembly wound around a support tube bearing the electrode leads.
Document JP 5 380798 B2 discloses a secondary battery comprising an electrode assembly placed in a half-pouch welded to a rigid support board.

### DISCLOSURE OF THE INVENTION

### TECHNICAL PROBLEM

One aspect of the present invention is to provide a secondary battery capable of firmly supporting an electrode assembly under use environments such vibration and impacts.

Another aspect of the present invention is to provide a secondary battery capable of effectively managing an internal temperature thereof.

### TECHNICAL SOLUTION

To address this problem, the invention provides a secondary battery according to claim 1.

The secondary battery according to the invention may present one or more feature(s) of dependent claims 2 to 11, in any combination allowed by the claims.

The invention also provides a battery pack according to claim 12.

### ADVANTAGEOUS EFFECTS

According to the present invention, the support supporting the electrode assembly may be provided to firmly support the electrode assembly under the use environments such as the vibration and impacts, and thus, the durability may be enhanced. Here, both the ends of the support may be connected to the plurality of electrode leads to more firmly support the electrode assembly.

In addition, the support may transfer the heat generated in the electrode assembly to the electrode lead to cool the surroundings through the heat dissipation, in which the heat is transferred through the electrode lead to the outside.

In addition, the coolant may be accommodated in the support to cool the surroundings. In addition, the support may be provided with the temperature sensor that senses the surrounding temperature to effectively manage the internal temperature.

### BRIEF DESCRIPTION OF THE DRAWINGS

FIG. 1 is a plan view of a secondary battery according to an example that is not part of the present invention.
FIG. 2 is a plan view illustrating an example of the inside of the secondary battery of figure 1.
FIG. 3 is a side cross-sectional view illustrating a main part of the secondary battery of figures 1 and 2.
FIG. 4 is a perspective view of a support in the secondary battery according to another example that is not part of the invention.
FIG. 5 is a plan view of the support and a temperature sensor according to another example that is not part of the invention.
FIG. 6 is a plan view illustrating an example of the inside of a secondary battery according to an embodiment of the present invention.
FIG. 7 is a side cross-sectional view illustrating a main part of the secondary battery of figure 6.
FIG. 8 is a perspective view of a support in the secondary battery of figures 6 and 7.

### MODE FOR CARRYING OUT THE INVENTION

The objectives, specific advantages, and novel features of the present invention will become more apparent from the following detailed description taken in conjunction with the accompanying drawings. It should be noted that the reference numerals are added to the components of the drawings in the present specification with the same numerals as possible, even if they are illustrated in other drawings. Also, the present invention may be embodied in different forms and should not be construed as limited to the embodiments set forth herein. In the following description of the present invention, the detailed descriptions of related arts which may unnecessarily obscure the gist of the present invention will be omitted.

### Secondary battery according to first embodiment

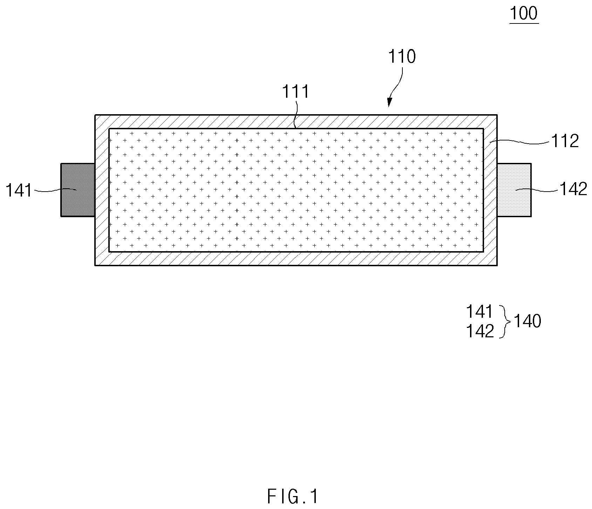

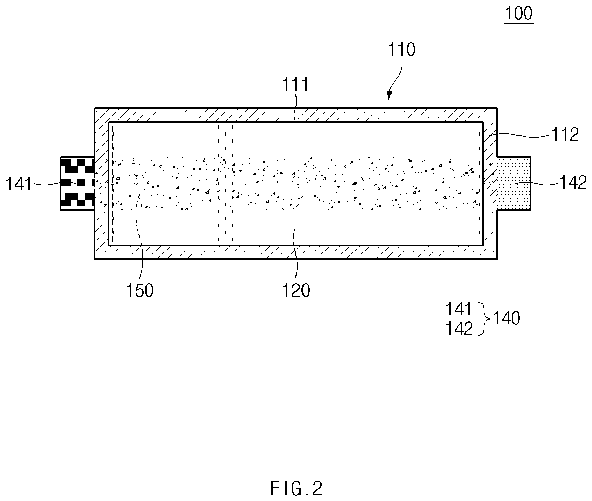

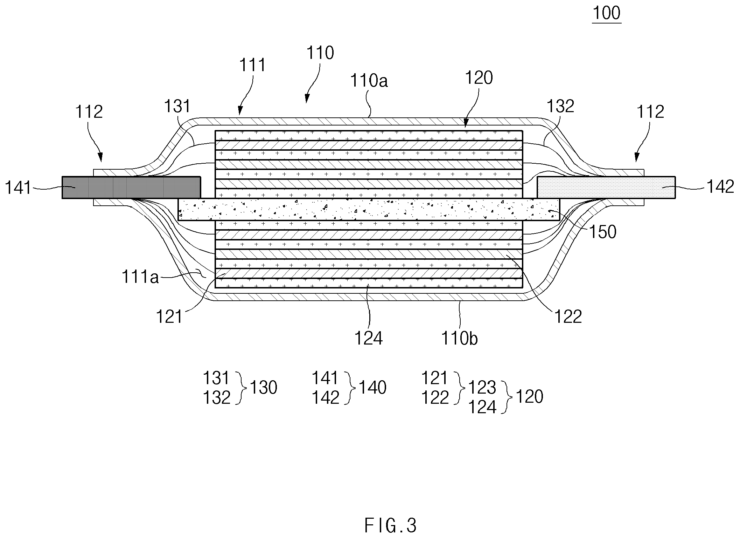

FIG. 1 is a plan view of a secondary battery according to a an example that is not part of of the present invention, FIG. 2 is a plan view illustrating an example of the inside of a secondary battery, and FIG. 3 is a side cross-sectional view illustrating a main part of the secondary battery.

Referring to FIGS. 1 to 3, a secondary battery 100 includes an electrode assembly 120, a pouch 110 in which the electrode assembly 120 is accommodated, a plurality of electrode leads 140 connected to the electrode assembly 120 to extend to the outside of the pouch 110, and a support 150 connected to the plurality of electrode leads 140 within the pouch.

In addition, the secondary battery 100 may further include a temperature sensor 160 that senses a temperature.

In more detail, referring to FIG. 3, the electrode assembly 120 may be a chargeable and dischargeable power generation element and may include electrodes 123 and separators 124, which are alternately stacked.

The electrodes 123 may include a positive electrode 121 and a negative electrode 122. Here, the electrode assembly 120 may have a structure in which the positive electrode 121/the separator 124/the negative electrode 122 are alternately laminated.

The positive electrode 121 and the negative electrode 122 may be provided in the shape of square plates and be stacked in one direction and also may face each other with the separator 124 therebetween.

The positive electrode 121 may include a positive electrode collector and a positive electrode active material stacked on the positive electrode collector.

The positive electrode collector may be made of an aluminum foil.

The positive electrode active material may include lithium manganese oxide, lithium cobalt oxide, lithium nickel oxide, lithium iron phosphate, or a compound or mixture containing at least one of the above-described materials.

The negative electrode 122 may include a negative electrode collector and a negative electrode active material stacked on the negative electrode collector.

The negative electrode collector may be made of, for example, a foil made of a copper (Cu) material.

The negative active material may be a compound or a mixture containing a graphite-based material.

The separator 124 is made of an insulation material to electrically insulate the positive electrode 121 from the negative electrode 122. Here, the separator 124 may be made of a polyolefin-based resin film such as polyethylene or polypropylene having micropores.

The electrode assembly 120 may further include an electrode tab 130 provided on an end of the electrode 123. Here, when the plurality of electrodes 123 are provided in the electrode assembly 120, the electrode tab 130 may be provided on each electrode 123.

The electrode tab 130 may include a positive electrode tab 131 provided on an end of the positive electrode 121 and a negative electrode tab 132 provided on an end of the negative electrode 122. Here, for example, the positive electrode tab 131 may be provided on an end of one side of the positive electrode 121, and the negative electrode tab 132 may be provided on an end of the other side of the negative electrode 122.

The pouch 110 may have an accommodation part 111a therein to accommodate the electrode assembly 120 therein.

In addition, the pouch 110 includes a body 111, in which the accommodation part 111a accommodating the electrode assembly 120 is provided, and a sealing part 112 sealed at an edge of the body 111.

The sealing part 112 may be disposed on an outer circumferential surface of the secondary battery 100 and may be formed through thermal compression. Here, the pouch 110 may include an upper case 110a and a lower case 110b, and the sealing part 112 may be formed by sealing outer circumferential surfaces of the upper case 110a and the lower case 110b. Here, a portion of the electrode lead 140, which is between the outer circumferential surface of the upper case 110a and the outer circumferential surface of the lower case 110b, may be sealed together with the outer circumferential surfaces of the upper case 110a and the lower case 110b. Thus, the electrode lead 140 may be fixed to the pouch 110 by the sealing part 112.

In addition, the pouch 110 may include a flexible material. Here, the pouch 110 may include a first insulating layer, an aluminum (Al) sheet, and a second insulating layer, which are stacked from the inside to the outside.

The first insulating layer may include an insulating material. Here, the first insulating layer may include a resin material.

A second insulating coating layer may include an insulating material. Here, the second insulating coating layer may include a nylon layer containing a nylon material and a resin layer containing a resin material.

The electrode lead 140 may be provided in plurality, be connected to both sides of the electrode assembly 120, and extend to the outside of the pouch so that the electrode assembly 120 is electrically connected to the outside. Here, the plurality of electrode leads 140 may be fixed to the sealing part 112 disposed on the outer circumferential surface of the pouch 110.

Here, the plurality of electrode leads 140 may include a positive electrode lead 141 connected to the positive electrode 121 and a negative electrode lead 142 connected to the negative electrode 122.

The positive electrode lead 141 may extend from one side of the electrode assembly 120, and the negative electrode lead 142 may extend from the other side of the electrode assembly 120. In addition, the positive lead 141 may be electrically connected to the positive electrode 121 through the positive electrode tab 131, and the negative lead 142 may be electrically connected to the negative electrode 122 through the negative electrode tab 132. Here, the positive electrode tab 131 may be connected to a first portion of the positive electrode lead 141, and the negative electrode tab 132 may be connected to a first portion of the negative lead 142. Here, both ends of the support 150 may be connected to the second portions of the positive lead 141 and the negative lead 142, respectively. Here, the first portion may be disposed outside the second portion.

In addition, the plurality of electrode leads 140 may extend in a longitudinal direction of the pouch 110.

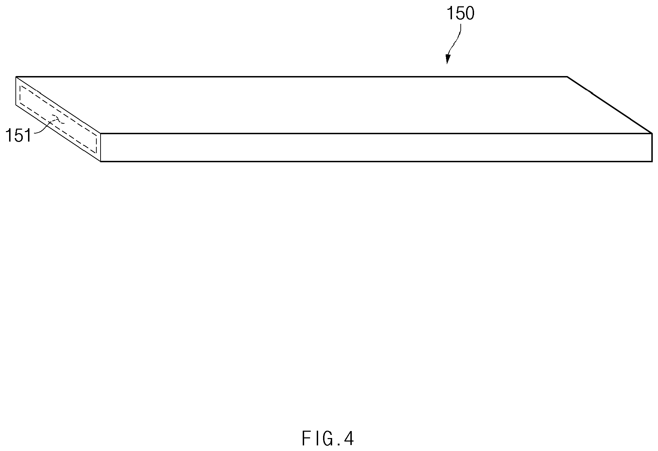

FIG. 4 is a perspective view of a support in the secondary battery.

Referring to FIGS. 3 and 4, the support 150 may support the electrode assembly 120 by connecting the plurality of electrode leads 140 to both ends thereof within the pouch 110.

In addition, the support 150 may include a non-conductive material. Here, the support 150 may include, for example, heat-dissipating plastic or heat-dissipating resin material. Here, the heat-dissipating plastic may specifically include, for example, thermally-conductive plastic. In addition, the heat-dissipating resin may specifically include, for example, a thermally conductive resin.

The support 150 may include a support part having certain strength or higher to enable a support function and a coating part applied on an outer surface of the support part so as not to react with an electrolyte. Here, for example, the support part may include an epoxy resin, which has mechanical strength for the supporting, has high thermal conductivity, and includes an insulating material, and the coating portion may include, for example, silicone, which has chemical resistance and is an insulating material.

In addition, the support 150 may be provided in the form of a hollow tube. Here, the support 150 may be provided, for example, in the shape of a square tube. Thus, a surface of the support 150, which is in contact with the electrode assembly 120, may provide a square contact surface to more well support the electrode assembly 120.

In addition, one end of the support 150 may be fixed to a lower side of the end of the positive electrode lead 141, and the other end of the support 150 may be fixed to a lower side of the end of the negative electrode lead 142.

In addition, the support 150 may be disposed between the positive electrode 121 and the negative electrode 122. That is, the support 150 may be stacked between the positive electrode 121 and the negative electrode 122 in the form of square plates, which are stacked in one direction. Here, the support 150 may, for example, face the positive electrode 121 and the negative electrode 122 with the separator 124 therebetween. As another example, the support 150 may be made of an insulating material and directly face the positive electrode 121 and the negative electrode 122.

Furthermore, the support 150 may pass through a central side of the electrode assembly 120. Here, the support 150 may pass through the central side of the electrode assembly 120 in the stacking direction. That is, the support 150 may, for example, pass through the electrode assembly 120 in the horizontal direction to support the electrode assembly 120 when the electrodes 123 and the separators 124 are alternately stacked in a vertical direction.

The support 150 may, for example, transfer heat generated in the electrode assembly 120 to the electrode lead 140. That is, high heat generated at a portion of the electrode assembly 120 around the support 150 may be transferred to the electrode lead 140, and the surroundings may be cooled through heat dissipation that transfers heat to the outside through the electrode lead 140.

In addition, as another example, the support 150 may have an accommodation space 151, in which coolant is accommodated, to cool the surroundings. That is, the coolant such as cooling water may be disposed inside the support 150 to cool the high heat generated in the electrode assembly 120 around the support 150. Here, the accommodation space 151 of the support 150 may be sealed or connected to a cooling water supply line disposed outside the pouch.

In addition, as another example, the support 150 may transfer the heat generated in the electrode assembly 120 to the electrode lead 140 to indirectly cool the surroundings and also may provide the accommodation space 151, in which the coolant is accommodated, to directly cool the surroundings.

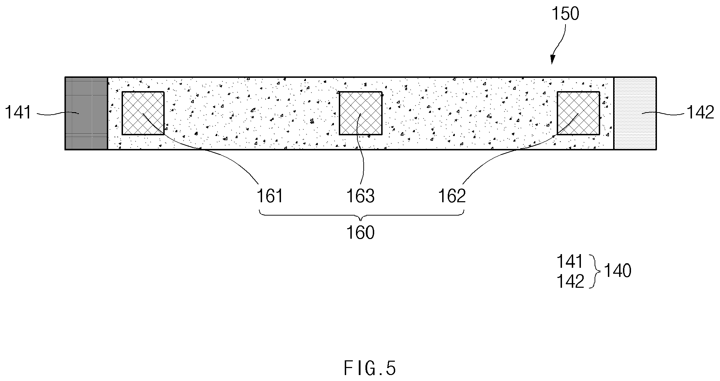

FIG. 5 is a plan view of the support and a temperature sensor according to an example that is not part of the present invention.

Referring to FIGS. 3 and 5, a temperature sensor 160 may be provided on the support 150 to sense a surrounding temperature. Here, the temperature sensor 160 may be disposed, for example, in an outer surface of the support 150.

In addition, the temperature sensor 160 may include a first temperature sensor 161 and a second temperature sensor 162, which are provided at both ends of the support 150, and a third temperature sensor 163 provided at a central portion of the support 150. Thus, a temperature around the electrode tab 130 or the electrode lead 140 may be sensed through the first temperature sensor 161 and the second temperature sensor 162, and a temperature at the central position of the electrode assembly 120 may be sensed through the third temperature sensor 163. Thus, temperature monitoring may be easy through the first temperature sensor 161, the second temperature sensor 162, and the third temperature sensor 163 to effectively manage the temperatures.

The secondary battery 100 as described above may include the support 150 that supports the electrode assembly 120 to firmly support the electrode assembly 120 from use environment such as vibration and impacts, thereby strengthening durability. Here, both ends of the support 150 may be connected to the positive electrode lead 141 and the negative electrode lead 142, respectively, and thus, the electrode assembly 120 may be supported more firmly.

In addition, the support 150 may transfer the heat generated in the electrode assembly 120 to the electrode lead 140 to cool the surroundings through the heat dissipation that transfers the heat to the outside through the electrode lead 140.

Furthermore, the coolant may be accommodated in the support 150 to cool the surroundings. In addition, the support 150 may be provided with the temperature sensor 160 that senses the surrounding temperature to effectively manage the internal temperature.

A battery pack may be configured to include the secondary battery 100 as described above.

Here, the battery pack may include a secondary battery 100 and a pack case that accommodates the secondary battery 100 therein. In addition, the battery pack may be a cell stack in which the plurality of secondary batteries 100 are stacked and may be accommodated in a pack case.

### Secondary battery according to second embodiment

Hereinafter, a secondary battery according to an embodiment of the present invention will be described.

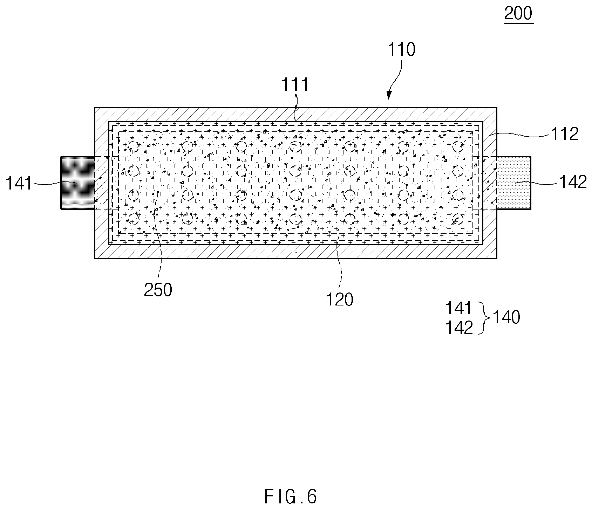

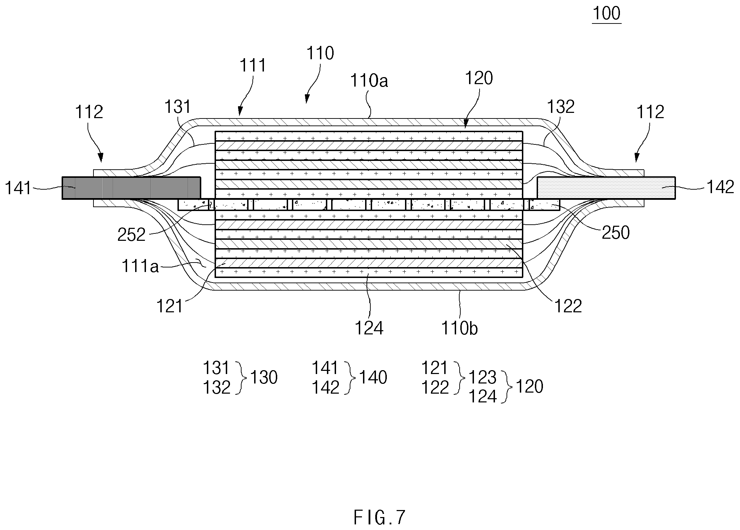

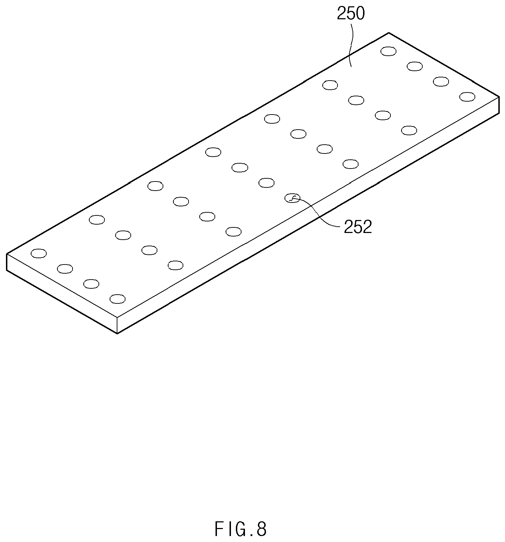

FIG. 6 is a plan view illustrating an example of the inside of a secondary battery according to an embodiment of the present invention, FIG. 7 is a side cross-sectional view illustrating a main part of the secondary battery according to the embodiment of the present invention, and FIG. 8 is a perspective view of a support in the secondary battery according to the embodiment of the present invention.

Referring to FIGS. 6 to 8, a secondary battery 200 according to the embodiment of the present invention includes an electrode assembly 120, a pouch 110 in which the electrode assembly 120 is accommodated, a plurality of electrode leads 140 connected to the electrode assembly 120 to extend to the outside of the pouch 110, and a support 250 connected to the plurality of electrode leads 140 within the pouch. In addition, the secondary battery 200 according to the embodiment of the present invention may further include a temperature sensor that senses a temperature.

The secondary battery 200 according to the embodiment of the present invention is the same as the secondary battery according to the first embodiment except for a shape of the support 250. Thus, contents of this embodiment, which are duplicated with those according to the forgoing embodiment, will be omitted or briefly described, and also, differences therebetween will be mainly described.

In more detail, the electrode assembly 120 may be a chargeable and dischargeable power generation element and may comprise electrodes 123 and separators 124, which are alternately stacked.

The electrodes 123 may include a positive electrode 121 and a negative electrode 122. Here, the electrode assembly 120 may have a structure in which the positive electrode 121/the separator 124/the negative electrode 122 are alternately laminated.

The positive electrode 121 and the negative electrode 122 may be provided in the shape of square plates and be stacked in one direction and also may face each other with the separator 124 therebetween.

The electrode assembly 120 may further include an electrode tab 130 provided on an end of the electrode 123. Here, when the plurality of electrodes 123 are provided in the electrode assembly 120, the electrode tab 130 may be provided on each electrode 123.

The electrode tab 130 may include a positive electrode tab 131 provided on an end of the positive electrode 121 and a negative electrode tab 132 provided on an end of the negative electrode 122. Here, for example, the positive electrode tab 131 may be provided on an end of one side of the positive electrode 121, and the negative electrode tab 132 may be provided on an end of the other side of the negative electrode 122.

The pouch 110 may have an accommodation part 111a therein to accommodate the electrode assembly 120 therein.

In addition, the pouch 110 includes a body 111, in which the accommodation part 111a accommodating the electrode assembly 120 is provided, and a sealing part 112 sealed at an edge of the body 111.

The sealing part 112 may be disposed on an outer circumferential surface of the secondary battery 200 and may be formed through thermal compression. Here, the pouch 110 may include an upper case 110a and a lower case 110b, and the sealing part 112 may be formed by sealing outer circumferential surfaces of the upper case 110a and the lower case 110b. Here, a portion of the electrode lead 140, which is between the outer circumferential surface of the upper case 110a and the outer circumferential surface of the lower case 110b, may be sealed together with the outer circumferential surfaces of the upper case 110a and the lower case 110b. Thus, the electrode lead 140 may be fixed to the pouch 110 by the sealing part 112.

In addition, the pouch 110 may include a flexible material. Here, the pouch 110 may include a first insulating layer, an aluminum (Al) sheet, and a second insulating layer, which are stacked from the inside to the outside.

The electrode lead 140 may be provided in plurality, be connected to both sides of the electrode assembly 120, and extend to the outside of the pouch so that the electrode assembly 120 is electrically connected to the outside. Here, the plurality of electrode leads 140 may be fixed to the sealing part 112 disposed on the outer circumferential surface of the pouch 110.

Here, the plurality of electrode leads 140 may include a positive electrode lead 141 connected to the positive electrode 121 and a negative electrode lead 142 connected to the negative electrode 122.

The positive electrode lead 141 may extend from one side of the electrode assembly 120, and the negative electrode lead 142 may extend from the other side of the electrode assembly 120. In addition, the positive lead 141 may be electrically connected to the positive electrode 121 through the positive electrode tab 131, and the negative lead 142 may be electrically connected to the negative electrode 122 through the negative electrode tab 132. Here, the positive electrode tab 131 may be connected to a first portion of the positive electrode lead 141, and the negative electrode tab 132 may be connected to a first portion of the negative lead 142. Here, both ends of the support 150 may be connected to the second portions of the positive lead 141 and the negative lead 142, respectively. Here, the first portion may be disposed outside the second portion.

In addition, the plurality of electrode leads 140 may extend in a longitudinal direction of the pouch 110.

The support 250 may support the electrode assembly 120 by connecting the plurality of electrode leads 140 to both ends thereof within the pouch 110.

In addition, the support 250 may include a non-conductive material. Here, the support 250 may include, for example, heat-dissipating plastic or heat-dissipating resin material. Here, the heat-dissipating plastic may specifically include, for example, thermally-conductive plastic. In addition, the heat-dissipating resin may specifically include, for example, a thermally conductive resin.

Furthermore, the support may include a non-combustible material.

The support 250 may include a support part having certain strength or higher to enable a support function and a coating part applied on an outer surface of the support part so as not to react with an electrolyte. Here, for example, the support part may include an epoxy resin, which has mechanical strength for the supporting, has high thermal conductivity, and includes an insulating material, and the coating portion may include, for example, silicone, which has chemical resistance and is an insulating material.

Furthermore, the support 250 has a plate shape. Here, the support 250 may be provided, for example, in the shape of a square plate. Thus, a surface of the support 150, which is in contact with the electrode assembly 120, may provide a square contact surface to more well support the electrode assembly 120. Here, the support 250 has a plurality of through-holes 252. Here, the through-holes 252 may be defined to pass in a stacking direction. Thus, lithium ions, etc. may move through the through-holes 252.

In addition, one end of the support 250 may be fixed to a lower side of the end of the positive electrode lead 141, and the other end of the support 250 may be fixed to a lower side of the end of the negative electrode lead 142.

In addition, the support 250 may be disposed between the positive electrode 121 and the negative electrode 122. That is, the support 250 may be stacked between the positive electrode 121 and the negative electrode 122 in the form of square plates, which are stacked in one direction. Here, the support 250 may, for example, face the positive electrode 121 and the negative electrode 122 with the separator 124 therebetween. As another example, the support 250 may be made of an insulating material and directly face the positive electrode 121 and the negative electrode 122.

Furthermore, the support 250 may pass through a central side of the electrode assembly 120. Here, the support 250 may pass through the central side of the electrode assembly 120 in the stacking direction. That is, the support 250 may, for example, pass through the electrode assembly 120 in the horizontal direction to support the electrode assembly 120 when the electrodes 123 and the separators 124 are alternately stacked in a vertical direction.

The support 250 may transfer heat generated in the electrode assembly 120 to the electrode lead 140. That is, high heat generated at a portion of the electrode assembly 120 around the support 250 may be transferred to the electrode lead 140, and the surrounding may be cooled through heat dissipation that transfers heat to the outside through the electrode lead 140.

### [Description of the Symbols]

100, 200: Secondary battery
110: Pouch
110a: Upper case
110b: Lower case
111: Body
111a: Accommodation part
112: Sealing part
120: Electrode assembly
121: Positive electrode
122: Negative electrode
123: Electrode
124: Separator
130: Electrode tab
131: Positive electrode tab
132: Negative electrode tab
140: Electrode lead
141: Positive electrode lead
142: Negative electrode lead
150, 250: Support
151: Accommodation space
160: Temperature sensor
161: First temperature sensor
162: Second temperature sensor
163: Third temperature sensor
252: Through-hole

## Claims

1. A secondary battery (100, 200) comprising:
an electrode assembly (120) in which electrodes (123) and separators (124) are alternatively stacked;
a pouch (110) in which the electrode assembly (120) is accommodated;
a plurality of electrode leads (140) connected to both side portions of the electrode assembly (120), respectively, to extend to the outside of the pouch (110); and
a support (150, 250) configured to connect the plurality of electrode leads (140),
wherein the support (150, 250) is provided in the form of a plate,
**characterized in that** the support (150, 250) has a plurality of through-holes (252) inside the pouch (110).

2. The secondary battery (100, 200) of claim **1,** wherein the support (150, 250) comprises a non-conductive material.

3. The secondary battery (100, 200) of claim **1,** further comprising a temperature sensor (160) configured to sense a surrounding temperature in the support (150, 250).

4. The secondary battery (100, 200) of claim **3,** wherein the temperature sensor (160) comprises:
a first temperature sensor (161) and a second temperature sensor (162), which are provided at both ends of the support (150, 250), respectively; and
a third temperature sensor (163) provided at a central portion of the support (150, 250).

5. The secondary battery (100, 200) of claim 1, wherein the support (150, 250) passes through the electrode assembly (120).

6. The secondary battery (100, 200) of claim 1, wherein the electrodes (123) comprise a positive electrode (121) and a negative electrode (122), and
the plurality of electrode leads (140) comprise a positive electrode lead (141) connected to the positive electrode (121) and a negative electrode lead (142) connected to the negative electrode (122),
wherein the positive electrode lead (141) extends from one side of the electrode assembly (120), and the negative electrode lead (142) extends from the other side of the electrode assembly (120), and
both ends of the support (150, 250) are connected to the positive electrode lead (141) and the negative electrode lead (142), respectively.

7. The secondary battery (100, 200) of claim 6, wherein one end of the support (150, 250) is fixed to a lower side of an end of the positive electrode lead (141), and
the other end of the support (150, 250) is fixed to a lower side of an end of the negative electrode lead (142).

8. The secondary battery (100, 200) of claim 6, wherein the positive electrode (121) and the negative electrode (122) are provided in the form of a square plates, which are stacked in one direction, and face each other with the separator (124) therebetween, and
the support (150, 250) is disposed between the positive electrode (121) and the negative electrode (122).

9. The secondary battery (100, 200) of claim **6,** wherein the electrode assembly (120) further comprises an electrode tab (130) provided on an end of the electrode (123),
wherein the electrode tab (130) comprises a positive electrode tab (131) provided on an end of the positive electrode (121) and a negative electrode tab (132) provided on an end of the negative electrode (122),
the positive electrode lead (141) is electrically connected to the positive electrode (121) through the positive electrode tab (131),
the negative electrode lead (142) is electrically connected to the negative electrode (122) through the negative electrode tab (132),
the positive electrode tab (131) is connected to a first portion of the positive electrode lead (141), and the negative electrode tab (132) is connected to a first portion of the negative electrode lead (142), and
both ends of the support (150, 250) are connected to second portions of the positive electrode lead (141) and the negative electrode lead (142).

10. The secondary battery (100, 200) of claim **1,** wherein the plurality of electrode leads (140) are fixed to a sealing part (112) disposed on an outer circumferential surface of the pouch (110), and
both ends of the support (150, 250) are connected to the plurality of electrode leads (140) to support (150, 250) the electrode assembly (120).

11. The secondary battery (100, 200) of claim 1, wherein the support (150, 250) is connected to the plurality of electrode leads (140) within the pouch (110).

12. A battery pack comprising the secondary battery (100, 200) of any one of claims 1 to 11.

## Patentansprüche

1. Sekundärbatterie (100, 200), umfassend:
• eine Elektrodenbaugruppe (120), in der Elektroden (123) und Separatoren (124) abwechselnd gestapelt sind;
• einen Beutel (110), in dem die Elektrodenbaugruppe (120) aufgenommen ist;
• eine Vielzahl von Elektrodenleitern (140), die jeweils mit beiden Seitenabschnitten der Elektrodenbaugruppe (120) verbunden sind, um sich zur Außenseite des Beutels (110) zu erstrecken; und
• einen Träger (150, 250), der so konfiguriert ist, dass er die Vielzahl von Elektrodenleitern (140) verbindet,
wobei der Träger (150, 250) in Form einer Platte bereitgestellt ist,
**dadurch gekennzeichnet, dass** der Träger (150, 250) eine Vielzahl von Durchgangslöchern (252) im Inneren des Beutels (110) aufweist.

2. Sekundärbatterie (100, 200) nach Anspruch 1, wobei der Träger (150, 250) ein nichtleitendes Material umfasst.

3. Sekundärbatterie (100, 200) nach Anspruch 1, ferner umfassend einen Temperatursensor (160), der so konfiguriert ist, dass er eine Umgebungstemperatur in dem Träger (150, 250) erfasst.

4. Sekundärbatterie (100, 200) nach Anspruch 3, wobei der Temperatursensor (160) umfasst:
• einen ersten Temperatursensor (161) und einen zweiten Temperatursensor (162), die jeweils an beiden Enden des Trägers (150, 250) bereitgestellt sind; und
• einen dritten Temperatursensor (163), der an einem mittleren Abschnitt des Trägers (150, 250) bereitgestellt ist.

5. Sekundärbatterie (100, 200) nach Anspruch 1, wobei der Träger (150, 250) durch die Elektrodenbaugruppe (120) hindurchgeht.

6. Sekundärbatterie (100, 200) nach Anspruch 1,
wobei die Elektroden (123) eine positive Elektrode (121) und eine negative Elektrode (122) umfassen, und
die Vielzahl von Elektrodenleitern (140) einen positiven Elektrodenleiter (141), der mit der positiven Elektrode (121) verbunden ist, und einen negativen Elektrodenleiter (142), der mit der negativen Elektrode (122) verbunden ist, umfassen,
wobei sich der positive Elektrodenleiter (141) von einer Seite der Elektrodenbaugruppe (120) erstreckt und sich der negative Elektrodenleiter (142) von der anderen Seite der Elektrodenbaugruppe (120) erstreckt, und
beide Enden des Trägers (150, 250) jeweils mit dem positiven Elektrodenleiter (141) und dem negativen Elektrodenleiter (142) verbunden sind.

7. Sekundärbatterie (100, 200) nach Anspruch 6, wobei ein Ende des Trägers (150, 250) an einer Unterseite eines Endes des positiven Elektrodenleiters (141) befestigt ist, und
das andere Ende des Trägers (150, 250) an einer Unterseite eines Endes des negativen Elektrodenleiters (142) befestigt ist.

8. Sekundärbatterie (100, 200) nach Anspruch 6, wobei die positive Elektrode (121) und die negative Elektrode (122) in Form von quadratischen Platten bereitgestellt sind, die in einer Richtung gestapelt sind und einander mit dem dazwischen liegenden Separator (124) zugewandt sind, und
der Träger (150, 250) zwischen der positiven Elektrode (121) und der negativen Elektrode (122) angeordnet ist.

9. Sekundärbatterie (100, 200) nach Anspruch 6, wobei die Elektrodenbaugruppe (120) ferner eine Elektrodenlasche (130) umfasst, die an einem Ende der Elektrode (123) bereitgestellt ist,
wobei die Elektrodenlasche (130) eine positive Elektrodenlasche (131), die an einem Ende der positiven Elektrode (121) bereitgestellt ist, und eine negative Elektrodenlasche (132), die an einem Ende der negativen Elektrode (122) bereitgestellt ist, umfasst,
der positive Elektrodenleiter (141) elektrisch mit der positiven Elektrode (121) über die positive Elektrodenlasche (131) verbunden ist,
der negative Elektrodenleiter (142) elektrisch mit der negativen Elektrode (122) über die negative Elektrodenlasche (132) verbunden ist,
die positive Elektrodenlasche (131) mit einem ersten Abschnitt des positiven Elektrodenleiters (141) verbunden ist, und die negative Elektrodenlasche (132) mit einem ersten Abschnitt des negativen Elektrodenleiters (142) verbunden ist, und
beide Enden des Trägers (150, 250) mit zweiten Abschnitten des positiven Elektrodenleiters (141) und des negativen Elektrodenleiters (142) verbunden sind.

10. Sekundärbatterie (100, 200) nach Anspruch 1, wobei die Vielzahl von Elektrodenleitern (140) an einem Dichtungsteil (112) befestigt sind, das an einer äußeren Umfangsfläche des Beutels (110) angeordnet ist, und
beide Enden des Trägers (150, 250) mit der Vielzahl von Elektrodenleitern (140) verbunden sind, um die Elektrodenbaugruppe (120) zu stützen (150, 250).

11. Sekundärbatterie (100, 200) nach Anspruch 1, wobei der Träger (150, 250) mit der Vielzahl von Elektrodenleitern (140) im Inneren des Beutels (110) verbunden ist.

12. Batteriepack, umfassend die Sekundärbatterie (100, 200) nach einem der Ansprüche 1 bis 11.

## Revendications

1. Batterie secondaire (100, 200) comprenant :
• un ensemble d'électrodes (120) dans lequel des électrodes (123) et des séparateurs (124) sont empilés de manière alternée ;
• une poche (110) dans laquelle l'ensemble d'électrodes (120) est logé ;
• une pluralité de languettes d'électrode (140) connectées aux deux parties latérales de l'ensemble d'électrodes (120), respectivement, pour s'étendre vers l'extérieur de la poche (110) ; et
• un support (150, 250) configuré pour connecter la pluralité de languettes d'électrode (140),
dans laquelle le support (150, 250) se présente sous la forme d'une plaque,
**caractérisée en ce que** le support (150, 250) présente une pluralité de trous traversants (252) à l'intérieur de la poche (110).

2. Batterie secondaire (100, 200) selon la revendication 1, dans laquelle le support (150, 250) comprend un matériau non conducteur.

3. Batterie secondaire (100, 200) selon la revendication 1, comprenant en outre un capteur de température (160) configuré pour détecter une température environnante dans le support (150, 250).

4. Batterie secondaire (100, 200) selon la revendication 3, dans laquelle le capteur de température (160) comprend :
• un premier capteur de température (161) et un deuxième capteur de température (162), qui sont prévus aux deux extrémités du support (150, 250), respectivement ; et
• un troisième capteur de température (163) prévu au niveau d'une partie centrale du support (150, 250).

5. Batterie secondaire (100, 200) selon la revendication 1, dans laquelle le support (150, 250) traverse l'ensemble d'électrodes (120).

6. Batterie secondaire (100, 200) selon la revendication 1,
dans laquelle les électrodes (123) comprennent une électrode positive (121) et une électrode négative (122), et
la pluralité de languettes d'électrode (140) comprend une languette d'électrode positive (141) connectée à l'électrode positive (121) et une languette d'électrode négative (142) connectée à l'électrode négative (122),
dans laquelle la languette d'électrode positive (141) s'étend depuis un côté de l'ensemble d'électrodes (120), et la languette d'électrode négative (142) s'étend depuis l'autre côté de l'ensemble d'électrodes (120), et
les deux extrémités du support (150, 250) sont connectées à la languette d'électrode positive (141) et à la languette d'électrode négative (142), respectivement.

7. Batterie secondaire (100, 200) selon la revendication 6, dans laquelle une extrémité du support (150, 250) est fixée à un côté inférieur d'une extrémité de la languette d'électrode positive (141), et
l'autre extrémité du support (150, 250) est fixée à un côté inférieur d'une extrémité de la languette d'électrode négative (142).

8. Batterie secondaire (100, 200) selon la revendication 6, dans laquelle l'électrode positive (121) et l'électrode négative (122) se présentent sous la forme de plaques carrées, qui sont empilées dans une direction, et se font face avec le séparateur (124) entre elles, et
le support (150, 250) est disposé entre l'électrode positive (121) et l'électrode négative (122).

9. Batterie secondaire (100, 200) selon la revendication 6, dans laquelle l'ensemble d'électrodes (120) comprend en outre une patte d'électrode (130) prévue sur une extrémité de l'électrode (123),
dans laquelle la patte d'électrode (130) comprend une patte d'électrode positive (131) prévue sur une extrémité de l'électrode positive (121) et une patte d'électrode négative (132) prévue sur une extrémité de l'électrode négative (122),
la languette d'électrode positive (141) est connectée électriquement à l'électrode positive (121) par l'intermédiaire de la patte d'électrode positive (131),
la languette d'électrode négative (142) est connectée électriquement à l'électrode négative (122) par l'intermédiaire de la patte d'électrode négative (132),
la patte d'électrode positive (131) est connectée à une première partie de la languette d'électrode positive (141), et la patte d'électrode négative (132) est connectée à une première partie de la languette d'électrode négative (142), et
les deux extrémités du support (150, 250) sont connectées à des deuxièmes parties de la languette d'électrode positive (141) et de la languette d'électrode négative (142).

10. Batterie secondaire (100, 200) selon la revendication 1, dans laquelle la pluralité de languettes d'électrode (140) sont fixées à une partie d'étanchéité (112) disposée sur une surface circonférentielle externe de la poche (110), et
les deux extrémités du support (150, 250) sont connectées à la pluralité de languettes d'électrode (140) pour soutenir (150, 250) l'ensemble d'électrodes (120).

11. Batterie secondaire (100, 200) selon la revendication 1, dans laquelle le support (150, 250) est connecté à la pluralité de languettes d'électrode (140) à l'intérieur de la poche (110).

12. Bloc-batterie comprenant la batterie secondaire (100, 200) selon l'une quelconque des revendications 1 à 11.
